# FASCICULE DE BREVET EUROPEEN

(11) **EP 2 451 163 B1**
(45) Date de publication et mention de la délivrance du brevet: **25.03.2015**
(21) Numéro de dépôt: 12152278.3
(22) Date de dépôt: 06.05.2008
(51) Int. Cl.: H04N 5/76, H04N 21/845

(54) **Procédé de mémorisation d'un objet multimédia, structure de donnée et terminal associé**
Speicherverfahren eines Multimediaobjekts, Datenstruktur und entsprechendes Endgerät
Method of storing a multimedia object in memory, associated data structure and terminal

(30) Priorité: 14.05.2007 FR 0703465; 15.06.2007 FR 0704294
(43) Date de publication de la demande: 09.05.2012
(62) Demande divisionnaire de: 08155740.7
(73) Titulaire: Apple Inc., Cupertino, CA 95014 (US)
(72) Inventeur: Pecqueur, Rémi, 92800 Puteaux (FR); Demilly, Fabien, 78310 Maurepas (FR)
(74) Mandataire: Lang, Johannes

(56) Documents cités:
- US-A1- 2005 275 752
- SINGER D ET AL: "PROPOSED REVISED COMMON TEXT MULTIMEDIA FILE FORMAT SPECIFICATION", 21 mars 2002 (2002-03-21), INTERNATIONAL STANDARD ISO/IEC, PAGE(S) I-IV,1, XP001074664, * page 35, alinéa 10 - page 38 *

## Description

La présente invention concerne un procédé pour l'enregistrement d'objets multimédias diffusés et plus particulièrement l'enregistrement de ces objets multimédias sous une forme permettant de compléter facilement l'enregistrement par des données téléchargées ultérieurement à la phase d'enregistrement.

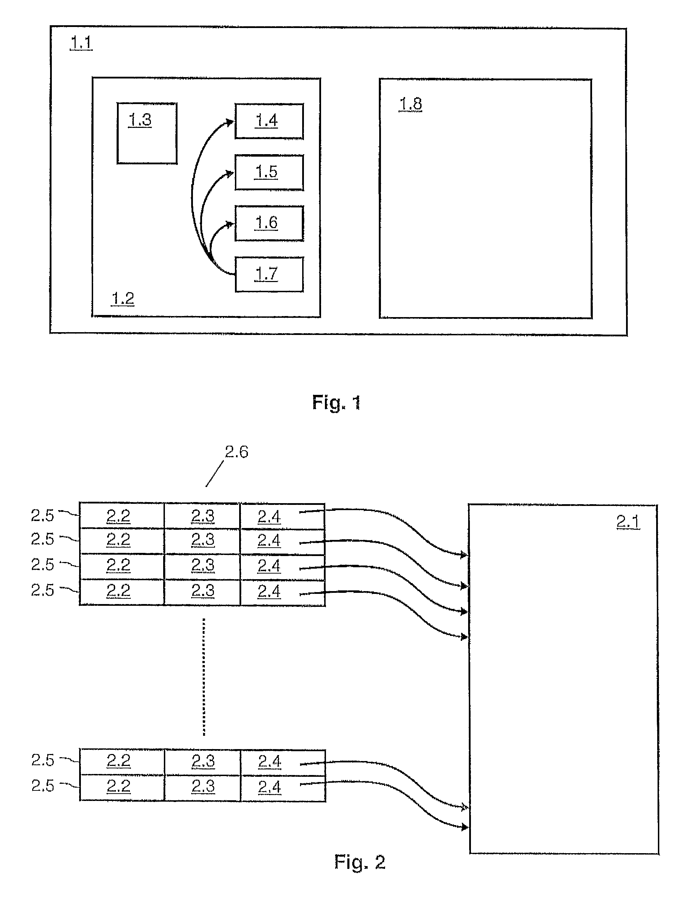

Il est connu d'enregistrer, notamment sur disque dur, des objets multimédias formant des services numériques ou des parties de services numériques diffusés. Ces objets multimédias sont généralement composés de flux audio et/ou vidéo, de données correspondant à un guide de service (nom du service, fournisseur, description, url, etc.), ou encore des méta-données relatives aux programmes (heure de début et de fin). La diffusion peut se faire sous toutes les formes utilisées de nos jours, par exemple par satellite, par câble, par onde hertzienne et également par des réseaux de communication comme les réseaux IP où elle se fait sous la forme de flux de données IP comme avec le système connu sous le nom de *datacast IP*, normalisé par DVB *Digital Video Broadband* ou BCAST, normalisé par le consortium Open Mobile Alliance. Cette diffusion est faite à destination de terminaux de réception. Ces terminaux sont dotés de moyens de réception et généralement de moyens d'acquisition et de restitution des objets multimédias. Dans certains cas, ces terminaux peuvent être également dotés de moyens de mémorisation permettant l'enregistrement des objets multimédias reçus en vue d'une restitution ultérieure. De multiples formats de fichiers permettent cette mémorisation de services enregistrés en vue de leur restitution indépendamment de la diffusion. Parmi ces formats, le format connu sous le nom de *MPEG-4 ISO file format* en anglais, se développe et est utilisé par nombre d'appareils de restitution de services, Ce format est décrit notamment dans les documents « ISO/IEC 14496/12 Information technology - Coding of audio-visual objects - Part 12 : ISO base media file format » et « ISO/IEC 14496/14 Information technology - Coding of audio-visual objects - Part 14 : MP4 file format ». La Fig. 1 reprend l'architecture générale de ce format de fichier. C'est un format de fichier orienté objet. Un premier objet englobant décrit le fichier lui-même : c'est l'objet fichier ISO référencé 1.1. Cet objet peut contenir un objet film, référencé 1.2, qui contient les données relatives à une présentation audiovisuelle. Une telle présentation audiovisuelle est constituée de pistes audio et de pistes vidéo qui sont combinées pour restituer cette présentation. Les données multimédias utiles qui composent la plus grande partie des données d'un service sont mémorisées dans un objet-donnée appelé *mdat* pour *media data* en anglais, référencé 1.8. L'objet film 1.2 contient un descripteur d'objet initial 1.3 référençant les autres objets du fichier. Il contient également un objet « piste » (*track* en anglais) pour chaque piste du fichier. Ces objets-piste, référencés 1.5 et 1.6 sur la Fig. 1 référencent des données multimédias correspondantes dans l'objet-donnée *mdat* 1.8. Le fichier contient éventuellement un objet BIFS (*Binary Format for Scene* en anglais) permettant de décrire des scènes et référencé 1.4. Pour résumer, le format de fichier comprend des données d'informations relatives aux objets contenus dans ledit dit format et des données dites utiles référencées par ces données d'informations. Si le fichier doit être diffusé sous forme de flux (*streaming* en anglais), il contient également au moins une piste, dite de relecture directe vidéo/audio (*playback* en anglais) qui décrit la formation des paquets pour une lecture par un lecteur multimédia de fichiers. Le fichier contient également au moins une piste dite de diffusion (*Track hint* en anglais) qui décrit la formation des paquets pour la diffusion dans un mode serveur. Cette piste de diffusion ou *track hint* est un objet dépendant du protocole utilisé pour la diffusion. Ainsi, plusieurs objets pistes de diffusions peuvent référencer le même objet film à partir du même fichier. Les protocoles RTP, FlexMux, ou MPEG-2 transport stream sont des protocoles parmi d'autres utilisés pour référencer des objets multimédia via des pistes de diffusion. Dans le cas d'une diffusion au moyen du protocole RTP (*Real Time Protocol* en anglais) sur IP (*Internet Protocol* en anglais), il y a généralement une piste de diffusion pour chaque piste élémentaire multimédia, que cette piste soit une piste audio ou une piste vidéo. En effet, le protocole RTP prévoit une diffusion de chaque piste élémentaire via une session RTP indépendante. Cette piste de diffusion est dans la grande majorité des cas associée à la piste de relecture directe. C'est-à-dire que les pointeurs de données de la piste de diffusion pointent directement sur les pointeurs de données de la piste de relecture directe qui eux pointent sur les données utiles. Dans certains modes de réalisation, les pointeurs de la piste de diffusion pointent directement sur les infos utiles sans référencer d'autres pistes.

Lorsqu'un terminal reçoit en diffusion un objet multimédia et désire en opérer une sauvegarde, il est nécessaire de créer un fichier possédant une telle structure dans un moyen de mémorisation. Ce moyen de mémorisation peut être un disque dur, par exemple, ou encore de la mémoire ou tout autre périphérique, même réseau, permettant la mémorisation d'une grande quantité de données. Dans le cas où la rediffusion ultérieure desdits objets multimédias enregistrés serait traitée comme une nouvelle diffusion, l'adjonction de pistes de diffusion audiovisuelles et de données contextuelles permettant la construction de ce flux de diffusion est nécessaire. Dans ce cas, le terminal commence par analyser les différents flux élémentaires qu'il reçoit, créé les structures de pistes associées, puis commence à mémoriser les données reçues dans un objet-donnée, tel que l'objet 1.8 de la Fig. 1.

Lors de la restitution du contenu mémorisé et dans un premier mode opératoire, tout se passe comme s'il s'agissait d'une diffusion. Le contenu est lu depuis le fichier et diffusé vers le module chargé de la restitution de ce contenu qui fonctionne de manière similaire à la restitution d'un contenu réellement diffusé vers le terminal. Pour gérer cette pseudo-diffusion interne au terminal, dans laquelle le terminal est lui-même un client serveur, il est nécessaire de créer des pistes de diffusion dans le fichier mémorisé. Ces pistes de diffusion indiquent le format conforme au protocole de diffusion, par exemple RTP. Ces pistes consistent en une succession d'enregistrements élémentaires pointant sur les données de contenu, Ces enregistrements élémentaires peuvent contenir, par exemple, le numéro de séquence RTP, la valeur de l'étiquette temporelle (*timestamp* en anglais) du paquet RTP et un pointeur vers le pointeur de données de la piste de relecture directe qui possède un pointeur vers les données constituant le contenu dudit fichier qui correspondent aux données utiles (*payload* en anglais) du paquet RTP. Le pointeur de données de la piste de diffusion peut également pointer directement vers des données constituant le contenu dudit fichier qui correspondent aux données utiles. La création de ces pistes de diffusion et de ces pistes de relecture directe comprend donc la mémorisation d'informations généralement issues des entêtes des paquets de données du protocole de diffusion dans le cas d'une piste de diffusion, ainsi que la mémorisation d'informations temporelles issues des encodeurs dans le cas d'une piste de relecture directe, plus les données utiles, plus éventuellement les informations relatives au guide de programme de diffusion. Dans le cas, d'un enregistrement d'un programme TV, le fichier peut contenir en plus dudit programme, des données d'informations de l'objet relative à l'enregistrement comme le numéro de la chaîne, la date, l'heure dudit enregistrement et le résumé descriptif dudit programme enregistré.

L'opération de mémorisation du contenu consiste à mémoriser, d'une part, la piste de diffusion avec le contenu de la partie donnée des paquets RTP dans un objet-donnée média (*mdat*) et, d'autre part, le contenu des entêtes des paquets RTP, du moins du numéro de séquence, l'étiquette temporelle et le pointeur sur l'emplacement dans l'objet-donnée du contenu ainsi mémorisé sous la forme d'une piste de diffusion. Les données ainsi mémorisées sont formatées comme pour un support destiné à la diffusion. Les pistes de diffusion contiennent des instructions pour un serveur de diffusion qui seconde les formations de paquets. Ces instructions peuvent contenir des données à envoyer directement par le serveur (par exemple, des informations d'entête) ou les segments de référence des données du média. Ces instructions sont encodées dans le format de fichier de la même orientation (édition) que les instructions d'un fichier conçu pour être lu localement, Le même média de données est utilisé et contient des pistes de diffusion, qu'il soit prévu pour être recomposé en local ou pour être diffusé selon différents types de transport (RTP, etc..). Plusieurs pistes de diffusion peuvent être incorporées dans le même fichier sans qu'il soit nécessaire de dupliquer les données utiles (*data*). Par ailleurs, l'opération de mémorisation du contenu consiste à créer et à mémoriser en parallèle de la mémorisation de la piste de diffusion, la piste de relecture directe avec l'étiquette temporelle et le pointeur sur l'emplacement dans l'objet de données du contenu ainsi mémorisé. L'opération de mémorisation produit donc une opération de construction par accumulation, d'une part, de l'objet-donnée contenant les données multimédias brutes et, d'autre part, d'une piste de diffusion contenant des références sur ces données multimédias et d'une piste de relecture directe contenant d'autres références sur ces données multimédias.

Lors de la restitution de l'objet multimédia ainsi mémorisé et dans un premier mode de réalisation, la piste de diffusion est parcourue et les paquets RTP sont reconstitués à partir des informations mémorisées dans la piste de diffusion pour l'entête et par les données référencées, ou par double référencement via la piste de relecture directe, pour la partie donnée du paquet. Les paquets ainsi reconstitués peuvent alors être transmis à la pile IP ; comme s'ils étaient reçus par le réseau de diffusion. Dans un deuxième mode de réalisation, les pistes de relecture directe (pistes audio et/ou vidéo) sont parcourues directement par un lecteur multimédia qui lit les informations temporelles et les associe aux données dites utiles pour les décoder sans avoir à passer par la pile IP, la piste de diffusion ne sera pas utilisée dans ce cas. Lors de la phase de mémorisation d'un objet multimédia diffusé, il peut se produire des erreurs de transmission entraînant la perte de paquets de données. Un moyen de parer à ces erreurs de transmission est de demander une retransmission des paquets manquants via un lien interactif, comme un lien WiFi ou. 3G, par exemple. Via ce lien, une requête est adressée à un serveur de récupération pour requérir les paquets manquants. Ces paquets manquants peuvent être des paquets non transmis, intentionnellement ou perdu lors de la transmission, ou encore transmis avec des erreurs et donc écartés à la réception. Le protocole HTTP (*Hyper Text Transfer Protocol* en anglais) peut, par exemple, être utilisé à cette fin. D'autres mécanismes de récupération d'erreurs peuvent également être utilisés, comme la diffusion périodique du programme multimédia (*carrousel* en anglais) qui consiste à réémettre le même programme plusieurs fois. Dans ce cas, les paquets non reçus lors de la première transmission, et donc non mémorisés, peuvent être récupérés lors d'une réémission subséquente.

Quel que soit le mode de récupération des paquets manquants utilisés, ces paquets sont reçus tardivement par rapport aux paquets régulièrement diffusés. Par ailleurs, certains objets multimédias peuvent également être conçus selon une architecture modulaire permettant la diffusion de certaines données dans un premier temps, ces données permettant une restitution de l'objet multimédia, tandis que des données supplémentaires peuvent être demandées ultérieurement de façon à compléter l'objet. Il peut s'agir de données permettant l'augmentation de la qualité de restitution comme des flux permettant l'augmentation de la définition des images d'une vidéo, de pistes sonores supplémentaires permettant une restitution multicanal ou encore de pistes audio dans des langues supplémentaires. Ces informations supplémentaires peuvent être demandées dans une phase ultérieure suivant la mémorisation de l'objet multimédia. Ainsi, la piste de diffusion construite par accumulation ne contient pas les éléments relatifs à ces paquets reçus tardivement. Concernant les données, le fait d'accumuler les données des paquets reçus tardivement à la suite des paquets préalablement reçus lors de la diffusion n'entraîne pas de problème fonctionnel car l'utilisation de ces données est faite via les pointeurs mémorisés dans la piste de diffusion. Pour ce qui est de la piste de diffusion, cette piste doit contenir les informations relatives aux paquets de diffusion en séquence. Dans le cas de l'enregistrement d'un objet subissant des erreurs en réception, les pistes de diffusion sont créées avec des sauts de séquences. La réception tardive de certains paquets entraîne, dans un premier mode opératoire, la nécessité de reconstruire les pistes de diffusion pour y introduire à leur place naturelle les informations relatives aux paquets reçus tardivement. L'opération, est très consommatrice en puissance processeur et en espace mémoire puisqu'elle consiste à reconstituer à partir de plusieurs objets séquentiellement fragmentés un objet complet. Dans un second mode, le lecteur multimédia doit faire lui-même la reconstitution des pistes de diffusion avec plusieurs objets. Dans le cas de grosses pertes de données, de plus de quelques secondes, les mécanismes comme les PLC (*Packet Loss Concealment* en anglais) ne peuvent rien faire sans l'adjonction de nouveaux mécanismes. Les PLC utilisent des techniques comme l'insertion (FEC), l'interpolation ou encore la regénération. L'invention vise à résoudre ce problème en décrivant un procédé de mémorisation d'un objet multimédia, cet objet étant composé de flux élémentaires de données multimédias, et permet l'adjonction subséquente de données relatives à des paquets reçus tardivement sans nécessiter la réécriture des pistes de diffusion.

La présente invention est définie par les revendications.

Les caractéristiques de l'invention mentionnées ci-dessus, ainsi que d'autres, apparaîtront plus clairement à la lecture de la description suivante d'un exemple ladite description étant faite en relation avec les dessins joints, parmi lesquels :
La Fig. 1 représente l'architecture générale d'un fichier selon la norme MPEG4.
La Fig. 2 représente l'architecture générale d'une piste de diffusion de données multimédias au sein d'un fichier MPEG-4.
La Fig. 3 représente une piste de donnée multimédia enregistrée suite à une diffusion selon un exemple.
La Fig. 4 représente la même piste complétée selon un exemple.
La Fig. 5 représente l'architecture d'un terminal de réception selon un exemple de réalisation de l'invention.

La structure d'une piste de diffusion de données multimédias au sein d'un fichier MPEG-4 est illustrée Fig. 2. Sur cette figure est représentée la piste de diffusion, référencée 2.6. Les données multimédias sont mémorisées dans un objet-donnée *mdat* référencé 2.1. La piste de diffusion est constituée d'une séquence d'enregistrements élémentaires 2.5. Chaque enregistrement élémentaire permet de décrire un paquet de données conformément au protocole de diffusion utilisé. L'exemple de réalisation repose sur l'utilisation du protocole RTP (*Real Time Protocol* en anglais) mais tout autre protocole peut être utilisé ; en particulier, il est possible d'utiliser directement le protocole UDP (*User Datagram Protocol* en anglais) ou encore le protocole FlexMux. Le protocole RTP repose sur la diffusion des données au sein de paquets constitués d'un entête et d'une partie donnée. Ces paquets sont émis au sein de datagrammes UDP, leur transmission n'est pas acquittée par le récepteur puisque UDP ne prévoit pas de mécanisme d'acquittement. L'entête d'un paquet RTP contient un numéro de séquence permettant au récepteur de reconstituer la séquence des paquets émis ainsi qu'une étiquette temporelle («time stamp » en anglais) du moment de création du premier octet de donnée du paquet. Grâce à cette étiquette temporelle, il est possible de synchroniser la réception avec l'émission des paquets sur une unique session RTP. Les données à transmettre sont rangées dans la partie donnée du paquet RTP. L'utilisation des rapports d'émission SR (*Sender Report* en anglais) du protocole RTCP (*Real Time Control Protocol* en anglais) permet de synchroniser plusieurs sessions RTP entre elles. C'est le cas par exemple d'une synchronisation entre une session audio et une session vidéo. Dans ce cas, les fréquences d'horloge de toutes les pistes de diffusion sont également enregistrées et peuvent apparaître sous la forme d'une description de session SDP par exemple (*Session Description Protocol* en anglais) enregistrée sous la forme d'une information de type *user-data.*

Une piste de diffusion dédiée au protocole RTP contient des enregistrements comprenant le numéro de séquence du paquet RTP à construire, référencé 2,2, une étiquette temporelle 2.3 et un pointeur sur les données à transmettre 2.4. L'enregistrement élémentaire de la piste de diffusion 2.5 peut également contenir d'autres informations non représentées. Lorsque l'on doit mémoriser un flux de données diffusé selon ce protocole, il suffit d'accumuler dans l'objet-donnée multimédia 2,1 les données transmises au sein de la partie donnée des paquets RTP reçus, Par ailleurs, la piste de diffusion est créée en ajoutant en séquence des enregistrements élémentaires 2.5 renseignés en utilisant les données de l'entête des paquets RTP reçus. Les numéros de séquence RTP des paquets reçus sont utilisés pour déterminer l'ordre dans la séquence des enregistrements élémentaires.

Grâce aux numéros de séquence intégrés dans les entêtes des paquets RTP, il est possible de détecter les paquets manquants. Ces paquets manquants peuvent avoir été simplement mal transmis et écartés lors de la réception ou perdus lors de la transmission, par exemple dans un routeur engorgé, ou encore dans le passage d'un tunnel. Dans ce cas, l'invention propose de créer pour chaque paquet manquant un enregistrement élémentaire placé dans la piste de diffusion à l'endroit qu'aurait occupé l'enregistrement élémentaire relatif au paquet manquant s'il avait été reçu. Cet enregistrement élémentaire peut éventuellement contenir le numéro de séquence du paquet perdu par analyse des numéros de séquence des paquets reçus. L'étiquette temporelle et le pointeur de données sont initialisés à des valeurs prédéfinies permettant l'identification de cet enregistrement élémentaire comme incomplet et ne correspondant pas à des données présentes. Le pointeur de données est, par exemple, mis à la valeur zéro constituant un pointeur nul. Alternativement, il pointe sur une image prédéfinie, par exemple au format JPEG, ou encore pointe sur une fonction particulière qui permette d'afficher le temps de rupture de l'objet rediffusé, ou informe simplement le lecteur multimédia qu'il doit offrir un certain type de comportement de lecture ou alors qu'il laisse à discrétion du lecteur multimédia le comportement adéquat. Dans le cas contraire, cela présuppose que le service de diffusion ou d'enregistrement fournisse une telle image ou fonction. En effet, la différence entre deux informations temporelles constituant un temps de rupture, c'est-à-dire la différence de temps entre le dernier paquet reçu avant le problème de réception et le premier paquet à nouveau reçu donne l'écart de temps à afficher à l'écran avant d'être à nouveau capable de continuer à diffuser par exemple le film objet.

Dans le cas d'un réseau engorgé, certains paquets peuvent arriver dans une séquence désordonnée, L'enregistrement élémentaire placé dans la liste de diffusion sera alors remplacé par le paquet nouvellement reçu ayant le bon numéro de séquence.

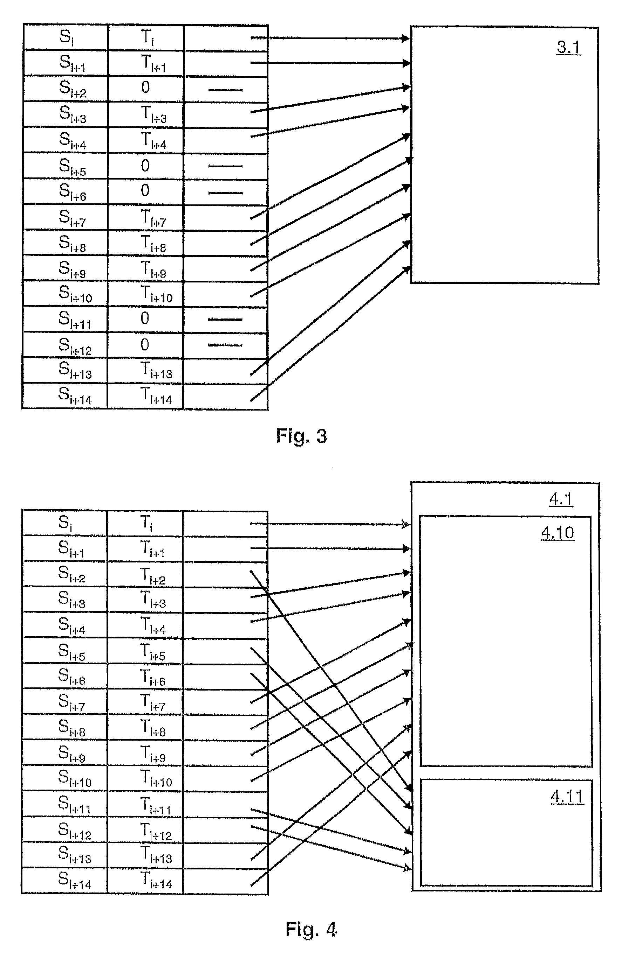

Cette situation est illustrée Fig. 3. Sur cette figure, est représenté l'état d'une piste de diffusion dans l'exemple de réalisation de l'invention suite à la réception de 10 paquets RTP dont les numéros de séquences Sᵢ à S_{i + 14} font apparaître la perte de 5 paquets, les paquets portant les numéros de séquence S_{i + 2}, S_{i + 5}, S_{i + 6}, S_{i + 11} et S_{i + 12}. Les données contenues dans les paquets reçus sont mémorisées dans l'objet-donnée 3.1. Les enregistrements élémentaires de la piste de diffusion correspondant aux paquets reçus sont mémorisés dans la piste de diffusion et leurs données initialisées avec les données contenues dans l'entête des paquets RTP, le numéro de séquence Sᵢ, l'étiquette temporelle Tᵢ et le pointeur sur les données du paquet dans l'objet de données 3.1. Des enregistrements élémentaires relatifs aux paquets perdus ont été insérés dans la piste de diffusion. Le numéro de séquence correspondant est renseigné, l'étiquette temporelle est mise à zéro, tandis que le pointeur correspondant est, dans le présent exemple de réalisation, un pointeur nul représenté par le tiret.

Suite à la réception des paquets diffusés, les paquets manquants sont demandés via un mécanisme de récupération d'erreur. Plusieurs types de mécanismes peuvent être mis en place. Par exemple, l'opérateur gérant la diffusion peut mettre en. oeuvre un serveur de récupération. Ce serveur dispose du contenu diffusé, même séquencement RTP à l'enregistrement et à la lecture, et est donc à même de répondre à des requêtes demandant l'envoi de paquets précis du flux de diffusion. L'identification des paquets demandés peut se faire, entre autres, par l'identification de l'objet multimédia, du numéro de séquence du paquet demandé et des étiquettes temporelles de début et de fin du/des ruptures comme paramètre de contrôle. Cette information doit être complétée par la fréquence d'horloge des étiquettes temporelles pour chaque piste au moment de l'enregistrement ou par l'heure de diffusion dans le cas où la diffusion de l'objet multimédia serait suffisamment longue pour avoir entraîné le rebouclage du compteur des numéros de séquence. Il est également possible, dans ce cas, de mémoriser à la réception un compteur de séquence que l'on incrémente à chaque rebouclage. Dans ce cas, on demande le paquet de numéro de séquence « n » dans la i^{ième} séquence. L'objet est mémorisé sur le serveur dans un fichier de format MPEG contenant les pistes de diffusions permettant de reconstruire à la demande un paquet de diffusion donné. Dans le cas où l'opérateur utiliserait plusieurs protocoles de diffusion à destination de réseaux ou de familles de terminaux différents, par exemple, le fichier mémorisant l'objet multimédia contient plusieurs pistes de diffusion correspondant aux différents protocoles de diffusion disponibles. Il suffit de parcourir la piste de diffusion correspondant au protocole de diffusion utilisé pour identifier le numéro de séquence demandé et reconstruire le paquet de données à l'aide de l'enregistrement élémentaire correspondant de la piste de diffusion et des données référencées dans cet enregistrement. Suite à la diffusion, après une étape de détection des paquets manquants, ces paquets sont donc demandés via un lien interactif au serveur de récupération. Ce lien interactif peut être une connexion IP sur la voie téléphonique, ou encore un lien WiFi ou tout autre lien interactif dont dispose le terminal de réception.

Alternativement, dans le cas où le terminal ne posséderait pas de lien interactif ou qu'il n'est pas en mesure d'utiliser ses moyens de récupération pour une raison quelconque, le terminal peut être conduit à restituer un programme incomplet dans lequel les données manquantes n'ont pas été complétées. Dans ce cas, il est possible d'afficher un décompte temporel ou le temps de rupture (5 secondes perdues) pour informer l'utilisateur du temps perdu et non reconstitué afin de valider l'utilisation dudit objet mémorisé. Cela peut être une combinaison de ces deux propositions avec la possibilité l'utilisateur via un appui sur une touche de passer directement le temps de rupture et reprendre la restitution du programme immédiatement sans attendre le moment de reprise. Il faut dans ce cas respecter la synchronisation des différents flux élémentaires. Par exemple, il est possible que les données manquantes affectent le flux vidéo mais que le flux audio soit complet. Dans ce cas, il est possible d'indiquer le temps de rupture vidéo mais de continuer à restituer le flux sonore. Si l'utilisateur choisit de passer ce temps de rupture, il faut sauter les informations sonores correspondantes pour reprendre une restitution synchronisée du son et de l'image à la fin de la rupture. De façon à permettre au terminal gérant la restitution de prendre des décisions relatives à cette restitution en fonction des coupures présentes dans le fichier, leur longueur, leur fréquence ou autre, il est possible de mettre dans le fichier des informations relatives aux coupures, c'est-à-dire au taux et à la localisation des paquets manquants. La présence de ces informations dans le fichier de données, par exemple au sein de l'objet global *moov*, permet au terminal de connaître ces informations sans avoir à parcourir l'intégralité du fichier à la recherche des coupures. Le terminal peut alors décider de ne pas restituer un fichier contenant trop de coupures ou d'annoncer le niveau de qualité du fichier à l'utilisateur. Ces différentes expériences utilisateur peuvent être améliorées par un format fichier qui peut, par exemple, donner à titre indicatif le nombre de coupures, le temps total de coupure, le pourcentage des paquets non reçus, ou tout autre information afin d'éviter au terminal de parcourir tout le fichier qui peut être volumineux. L'envoi de ces informations peut être effectué à l'aide du protocole décrit dans la ou les pistes de diffusion.

Le protocole utilisé pour cette requête de récupération peut être tout protocole permettant l'envoi d'une requête au serveur et la réception de données en réponse à cette requête, L'exemple de réalisation de l'invention utilise le prototole HTTP (*Hyper Text Transfer Protocol* en anglais), qui est bien adapté à ce besoin, mais tout autre protocole, par exemple l'utilisation du protocole RTP via les *Sender Reports* et *Receiver Reports.*

Les paquets ainsi récupérés sont alors insérés dans la structure existante sans nécessiter de modifier cette structure. En particulier, il n'est pas nécessaire de reconstituer les pistes de diffusion dans un seul et unique fichier. Cette insertion est illustrée Fig. 4. Les données sont accumulées dans le fichier au sein de l'objet-données 4.1 à la suite des données 4.10 mémorisées lors de la diffusion. Le bloc de données au sein de l'objet-donnée 4.1 contenant ces données récupérées est référencé 4.11. Les enregistrements élémentaires correspondant aux numéros de séquence S_{i + 2}, S_{i + 5,} S_{i + 6}, S_{i + 11} et S_{i + 12} qui avaient été insérés sont maintenant renseignés avec les données issues des entêtes des paquets RTP récupérés. En particulier, leurs étiquettes temporelles T_{i + 2}, T_{i + 5}, T_{i + 6}, T_{i + 11} et T_{i + 12} sont lues dans les entêtes des paquets récupérés et sont insérés dans les enregistrements élémentaires correspondants. Tout en économisant en temps de calcul et en puissance processeur, on constate que de cette manière, il est possible de compléter le fichier sans avoir à apporter de modifications à sa structure.

Alternativement, l'enregistrement élémentaire signalant un paquet manquant est renseigné par une référence sur un objet, par exemple nommé *ErrorSampleEntry,* permettant de faire de l'indexation ou de créer une nouvelle piste de diffusion référençant les types d'erreur. Le format de fichier peut également faire des enregistrements comprenant tout type de protocole de diffsuion comme directement un flux de transport (TS). Dans ce cas, une application peut créer une piste élémentaire et référencer les paquets manquants en détectant cet objet *ErrorSampleEntry.* Cette piste élémentaire est indépendante du protocole de diffusion et ne fait pas appel à lui. Une application peut alors interpréter le fichier et savoir si celui-ci est incomplet ou non sans nécessairement être capable d'interpréter le protocole de diffusion, par exemple le protocole RTP. Cette application peut alors faire une requête pour obtenir les données manquantes en utilisant les informations incluses dans les pistes, notamment avec des données de type XML. L'interprétation de cette classe *ErrorSampleEntry* permet alors au logiciel applicatif de restitution du contenu de supporter différents types de codeurs décodeurs et de pistes de diffusion.

L'objet *ErrorSampleEntry* peut par exemple avoir la structure suivante :

```
 class ErrorSampleEntry extends
 SampleEntry('erse') {
 /*
 Informations sur la gestion de l'erreur
 */
 uint(16) hinttrackversion = 1;
 uint(16) highestcompatibleversion = 1;
 référence du type de protocole de diffusion supporté, par exemple RTP, TS, ES.
 }
```

Dans l'invention un nouveau type d'enregistrement élémentaire est défini. Ce nouveau type d'enregistrement élémentaire permet une redirection. Il est identifié, par exemple, par un champ particulier dans l'enregistrement. Dans ce cas, lorsque plusieurs paquets sont manquants, on ne crée qu'un seul enregistrement élémentaire de redirection au sein de la piste de diffusion localisé à l'endroit où auraient été les enregistrements élémentaires correspondant aux paquets manquants s'ils avaient été reçus, Dans un premier temps, cet enregistrement élémentaire de redirection pointe dans le vide. Lorsque les données manquantes sont reçues, la partie donnée est mémorisée dans l'objet-donnée et un tronçon de piste de diffusion correspondant aux paquets reçus tardivement est créé. Une fois ce tronçon créé, son adresse est mémorisée dans l'enregistrement élémentaire de redirection. Lorsque la piste de diffusion est parcourue, lors de la lecture d'un enregistrement de redirection, on suit le pointeur pour lire les enregistrements élémentaires suivants appartenant au tronçon. Arrivée à la fin du tronçon, la lecture reprend avec l'enregistrement élémentaire suivant l'enregistrement élémentaire de redirection.

Il est également possible de prévoir des pistes de diffusion complètes ne comprenant que des enregistrements élémentaires vides destinés à recevoir des informations complémentaires ultérieures. Par exemple, lors de la diffusion d'un programme, celui-ci est enregistré : des pistes sont donc créées correspondant aux flux vidéo et audio reçus. On peut également créer des pistes de diffusion correspondant à d'autres langues. Ces pistes de diffusion sont alors composées d'enregistrements élémentaires vides du fait qu'aucun flux audio correspondant à ces langues n'est reçu lors de la diffusion. À la demande de l'utilisateur, il est possible, ultérieurement d'utiliser un canal interactif pour demander l'envoi des données correspondant au flux audio d'une autre langue et de renseigner les valeurs des enregistrements élémentaires correspondants. De cette façon, une fois encore, le fichier initial enregistré peut être complété sans devoir en modifier la structure.

Dans le cas où un terminal serait amené à restituer un fichier incomplet, c'est-à-dire un fichier contenant des flux élémentaires dont certains paquets sont manquants, plusieurs stratégies peuvent être adoptées par le terminal pour la gestion de ces parties manquantes ou coupures. Une première stratégie consiste à ne rien restituer pendant la coupure, soit donc un écran noir pour la vidéo ou pas de son pour de l'audio. Une autre stratégie consiste à afficher des informations sur la durée de la coupure à l'écran. Il est également possible de donner le choix à l'utilisateur d'attendre la fin de la coupure ou de passer directement à la suite du programme. Le terminal peut encore choisir de restituer du contenu préenregistré qu'il possède en mémoire. En lieu et place d'un pointeur vide au sein de l'enregistrement élémentaire correspondant à un paquet manquant, il est possible de mémoriser une référence sur une stratégie préférée pour la gestion de la coupure. Le terminal tentant la restitution d'un fichier incomplet trouve, dans ce cas, la référence de la stratégie souhaitée pour la gestion de la coupure. Il peut alors l'appliquer ou choisir d'ignorer cette consigne.

De la même façon, il est possible de compléter une piste vidéo par des flux complémentaires permettant d'en améliorer la qualité. Ceci peut être fait, par exemple, dans le cadre d'un codage hiérarchique, où un premier flux vidéo basse résolution est diffusé. Ce flux est adapté à la restitution sur un terminal mobile possédant un petit écran. Lorsque ce flux est enregistré, on prévoit l'enregistrement de pistes de diffusion également pour des flux complémentaires contenant l'information complémentaire pour obtenir une restitution de meilleure résolution. Ici encore, ces données complémentaires peuvent être requises via un canal interactif et compléter le fichier initial en vue, par exemple, d'une restitution du programme sur un téléviseur ou tout autre écran permettant de profiter d'une meilleure résolution. Ces données complémentaires peuvent être également demandées par un autre appareil que celui ayant effectué l'enregistrement dans le cas où le fichier enregistré est transféré sur cet autre appareil. On peut, par exemple, enregistrer l'objet multimédia sur son téléphone portable puis le transférer sur un ordinateur ou un décodeur branché sur la télévision et là, demander, via l'accès domestique au réseau Internet, les compléments du programme à l'opérateur.

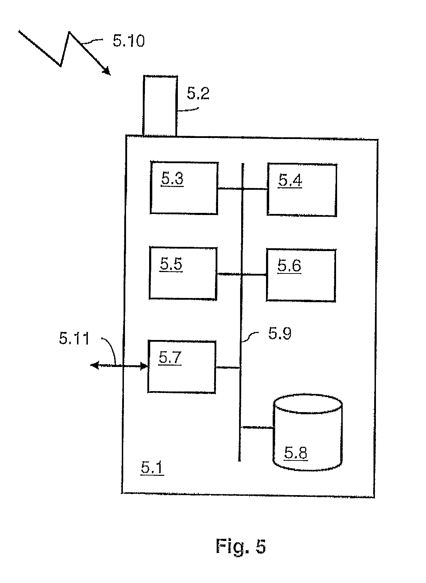

La Fig. 5 illustre un exemple de terminal de réception selon l'invention. Ce terminal 5.1 est un récepteur de téléphonie mobile doté d'une antenne de réception 5.2 permettant d'émettre et de recevoir des appels téléphoniques. De plus, cette antenne permet également de recevoir des données diffusées comme des objets multimédias via un canal DVB-II par exemple référencé 5.10. Le terminal est doté d'une interface radio 5.3 permettant de traiter les signaux à émettre ou reçus par l'antenne 5.2. Le terminal est opéré sous le contrôle d'un processeur 5.4 au moyen de programmes logiciels mémorisés dans la mémoire morte 5.5. Ces programmes utilisent la mémoire vive 5.6 comme mémoire de travail. Le terminal 5.1 de l'exemple de réalisation de l'invention est doté d'au moins une autre interface réseau 5.7 telle qu'une interface sans fil Wifi permettant la connexion à un réseau interactif comme le réseau domestique de l'utilisateur ou tout point d'accès public permettant l'accès à Internet. Il peut également s'agir d'une interface USB (*Universal Sérial Bus* en anglais), d'une interface Ethernet ou de toute interface de communication. Cet accès est référencé 5.11. Le terminal est doté de moyens de mémorisation 5.8 qui peuvent être constitués de carte de mémoire selon l'un des formats Compact Flash, SD Card ou autre. Ces moyens peuvent également être constitués d'un disque dur embarqué de petite taille. Tous ces composants peuvent interagir grâce à un bus de données et de contrôle 5.9.

Un tel terminal est donc apte à recevoir des services numériques composés d'objets multimédias diffusés via le canal DVB-H 5.10. Les objets multimédias ainsi diffusés et reçus par le terminal peuvent être restitués immédiatement au moyen d'un écran et de haut-parleurs non représentés. Ils peuvent également être mémorisés sur les moyens de mémorisation 5.8 en vue d'une restitution ultérieure. Cette mémorisation s'effectue sous la forme de fichiers MPEG-4 conformément au procédé précédemment décrit. En particulier, les paquets manquants ou les données complémentaires sont requis via le canal interactif utilisant l'interface 5.7. Ces fichiers peuvent être rejoués ultérieurement par le terminal ou bien échangés avec d'autres appareils de l'usager. Ces échanges peuvent être faits, par exemple, grâce à l'interface réseau 5.7 ou encore, dans le cas où le moyen de mémorisation serait une carte mémoire amovible, par connexion de ladite carte mémoire à l'autre appareil tel qu'un ordinateur par exemple.

Il est également possible de créer délibérément des fichiers incomplets par un choix judicieux des informations non enregistrées. Par exemple, on peut omettre l'enregistrement de certaines images dans un flux vidéo, sachant que celles-ci seront reconstruites lors de la restitution. Dans ce cas, on peut choisir de dégrader légèrement la restitution pour gagner de la place de stockage au niveau de l'enregistrement. Dans un tel fonctionnement, la restitution ne signale pas les paquets manquants, par l'affichage des temps de rupture, puisque la référence de la stratégie souhaitée pour la gestion de la coupure indiquera une technique de dégradation de résolution ou de service.

## Revendications

1. Procédé de mémorisation d'un objet multimédia constitué d'au moins un flux élémentaire de données, par un terminal de réception dudit au moins un flux élémentaire, ledit au moins un flux étant reçu par le terminal sous la forme de paquets de données comportant une partie donnée et un entête comportant des numéros de séquence, comprenant :
- une étape de mémorisation dans un objet-donnée des parties données des paquets reçus ;
- une étape de création d'une piste de diffusion constituée d'enregistrements élémentaires relatifs aux paquets de données, ces enregistrements élémentaires étant mémorisés en séquence selon les numéros de séquence des paquets reçus et comprenant une référence aux données dudit paquet au sein de l'objet-donnée ;
**caractérisé en ce qu'**il comprend en outre :
- une étape de création d'un seul enregistrement élémentaire de redirection correspondant à des paquets non reçus au sein de ladite piste de diffusion, ledit seul enregistrement élémentaire de redirection étant mémorisé dans la séquence aux endroits où auraient été mémorisés les enregistrements élémentaires correspondants si les paquets avaient été reçus.

2. Procédé selon la revendication 1, **caractérisé en ce que** le numéro de séquence des paquets non reçus est mémorisé dans les enregistrements élémentaires correspondant à ces paquets non reçus.

3. Procédé selon l'une des revendications 1 ou 2, **caractérisé en ce qu'**il comporte en outre une étape de récupération des paquets non reçus ultérieurement à la création de ladite piste de diffusion.

4. Procédé selon la revendication 3, **caractérisé en ce que** cette étape de récupération des paquets non reçus comprend :
- l'envoi d'une requête de récupération à un serveur de récupération ; et
- la réception de données comprenant les paquets non reçus en réponse à ladite requête.

5. Procédé selon l'une des revendications 1 à 4, **caractérisé en ce que** les paquets non reçus forment l'intégralité d'un flux de données élémentaire permettant de compléter l'objet multimédia.

6. Procédé selon la revendication 1, **caractérisé en ce qu'**il comporte en outre une étape de mémorisation d'informations relatives au taux et à la localisation des paquets manquants.

7. Structure de données mémorisant un objet multimédia constitué d'au moins un flux élémentaire de données, ledit au moins un flux élémentaire étant susceptible d'être diffusé sous la forme de paquets de données comportant une partie donnée et un entête comportant des numéros de séquence, comprenant :
- un objet-donnée mémorisant les données dudit au moins un flux ;
- au moins une piste de diffusion constituée d'enregistrements élémentaires relatifs aux paquets de données susceptibles d'être diffusés, ces enregistrements élémentaires étant mémorisés en séquence selon les numéros de séquence desdits paquets et comprenant une référence aux données dudit paquet au sein de l'objet-donnée ;
**caractérisée en ce qu'**elle comprend en outre :
- un seul enregistrement élémentaire de redirection correspondant à des paquets dont les données ne sont pas mémorisées dans l'objet-donnée, au sein de ladite piste de diffusion, ledit seul enregistrement élémentaire de redirection étant mémorisé dans la séquence aux endroits où auraient été mémorisés les enregistrements élémentaires correspondant à ces mêmes paquets si les données correspondantes avaient été mémorisées dans l'objet-donnée.

8. Structure de données selon la revendication 7, **caractérisée en ce que** ledit seul enregistrement élémentaire de redirection correspondant à des paquets dont les données ne sont pas mémorisées dans l'objet-donnée, comprend une référence à une stratégie de gestion des données manquantes.

9. Terminal de réception d'un objet multimédia constitué d'au moins un flux élémentaire de données, ledit au moins un flux étant reçu par le terminal sous la forme de paquets de données comportant une partie donnée et un entête comportant des numéros de séquence, comprenant :
- un moyen de mémorisation dans un objet-donnée des parties données des paquets reçus ;
- un moyen de création d'une piste de diffusion constituée d'enregistrements élémentaires relatifs aux paquets de données, ces enregistrements élémentaires étant mémorisés en séquence selon les numéros de séquence des paquets reçus et comprenant une référence aux données dudit paquet au sein de l'objet-donnée ;
**caractérisé en ce qu**'il comprend en outre :
- un moyen de création d'un seul enregistrement élémentaire de redirection correspondant à des paquets non reçus au sein de ladite piste de diffusion, ledit seul enregistrement élémentaire de redirection étant mémorisé dans la séquence aux endroits où auraient été mémorisés les enregistrements élémentaires correspondants si les paquets avaient été reçus.

10. Terminal selon la revendication 9, **caractérisé en ce qu'**il comprend des moyens d'afficher des informations relatives au temps de rupture lors de la restitution d'un objet multimédia incomplet.

## Patentansprüche

1. Verfahren zum Speichern eines Multimedia-Objekts, das aus mindestens einem elementaren Datenfluss besteht, durch ein Empfangsendgerät des mindestens einen elementaren Flusses, wobei der mindestens eine Fluss durch das Endgerät in Form von Datenpaketen empfangen wird, die einen Datenteil und einen Header umfassen, der Sequenznummern umfasst, wobei das Verfahren die folgenden Schritte umfasst:
- einen Schritt des Speicherns der Datenteile der empfangenen Pakete in einem Datenobjekt;
- einen Schritt des Erzeugens einer Ausstrahlungsspur, die aus elementaren Aufzeichnungen besteht, die sich auf die Datenpakete beziehen, wobei diese elementaren Aufzeichnungen in Sequenz gemäß der Sequenznummern der empfangenen Pakete gespeichert werden und eine Referenz auf die Daten des Pakets innerhalb des Datenobjekts umfassen;
**dadurch gekennzeichnet, dass** es weiterhin Folgendes umfasst:
- einen Schritt des Erzeugens einer einzigen elementaren Aufzeichnung zur Umleitung, die nicht empfangenen Paketen innerhalb der Ausstrahlungsspur entspricht, wobei die einzige elementare Aufzeichnung zur Umleitung in der Sequenz an den Orten gespeichert wird, wo die entsprechenden elementaren Aufzeichnungen abgespeichert worden wären, wenn die Pakete empfangen worden wären.

2. Verfahren nach Anspruch 1, **dadurch gekennzeichnet, dass** die Sequenznummer der nicht empfangenen Pakete in den elementaren Aufzeichnungen gespeichert wird, die diesen nicht empfangenen Paketen entsprechen.

3. Verfahren nach einem der Ansprüche 1 oder 2, **dadurch gekennzeichnet, dass** es weiterhin einen Schritt des Zurückholens der nicht empfangenen Pakete nach der Erzeugung der Ausstrahlungsspur umfasst.

4. Verfahren nach Anspruch 3, **dadurch gekennzeichnet, dass** dieser Schritt des Zurückholens der nicht empfangenen Pakete Folgendes umfasst:
- das Senden einer Zurückholungsanfrage an einen Zurückholungs-Server;
- das Empfangen von Daten, die die nicht empfangenen Pakete umfassen, als Antwort auf die Anfrage.

5. Verfahren nach einem der Ansprüche 1 bis 4, **dadurch gekennzeichnet, dass** die nicht empfangenen Pakete die Gesamtheit eines elementaren Datenflusses bilden, der es ermöglicht, das Multimedia-Objekt zu ergänzen.

6. Verfahren nach Anspruch 1, **dadurch gekennzeichnet, dass** es weiterhin einen Schritt des Speicherns von Informationen umfasst, die sich auf die Rate und den Ort der fehlenden Pakete beziehen.

7. Datenstruktur zum Speichern eines Multimedia-Objekts, das aus mindestens einem elementaren Datenfluss besteht, wobei der mindestens eine elementare Fluss in der Lage ist, in Form von Datenpaketen ausgestrahlt zu werden, die einen Datenteil und einen Header umfassen, der Sequenznummern umfasst, wobei die Datenstruktur Folgendes umfasst:
- ein Datenobjekt, das die Daten des mindestens einen Flusses speichert;
- mindestens eine Ausstrahlungsspur, die aus elementaren Aufzeichnungen besteht, die sich auf die Datenpakete beziehen, die in der Lage sind, ausgestrahlt zu werden, wobei diese elementaren Aufzeichnungen in Sequenz gemäß der Sequenznummern der Pakete gespeichert sind und eine Referenz auf die Daten des Pakets innerhalb des Datenobjekts umfassen;
**dadurch gekennzeichnet, dass** sie weiterhin Folgendes umfasst:
- eine einzige elementare Aufzeichnung zur Umleitung, die Paketen entspricht, deren Daten nicht in dem Datenobjekt gespeichert sind, innerhalb der Ausstrahlungsspur, wobei die einzige elementare Aufzeichnung zur Umleitung in der Sequenz an den Orten gespeichert ist, wo die elementaren Aufzeichnungen, die eben diesen Paketen entsprechen, gespeichert worden wären, wenn die entsprechenden Daten im Datenobjekt gespeichert worden wären.

8. Datenstruktur nach Anspruch 7, **dadurch gekennzeichnet, dass** die einzige elementare Aufzeichnung zur Umleitung, die Paketen entspricht, deren Daten nicht im Datenobjekt gespeichert sind, eine Referenz auf eine Strategie zum Verwalten der fehlenden Daten umfasst.

9. Endgerät zum Empfangen eines Multimedia-Objekts, das aus mindestens einem elementaren Datenfluss besteht, wobei der mindestens eine Fluss durch das Endgerät in Form von Datenpaketen empfangen wird, die einen Datenteil und einen Header umfassen, der Sequenznummern umfasst, wobei das Endgerät Folgendes umfasst:
- Mittel zum Speichern der Datenteile der empfangenen Pakete in dem Datenobjekt;
- Mittel zum Erzeugen einer Ausstrahlungsspur, die aus elementaren Aufzeichnungen besteht, die sich auf die Datenpakete beziehen, wobei diese elementaren Aufzeichnungen in Sequenz gemäß der Sequenznummern der empfangenen Pakete gespeichert sind und eine Referenz auf die Daten des Pakets innerhalb des Datenobjekts umfassen;
**dadurch gekennzeichnet, dass** es weiterhin Folgendes umfasst:
- Mittel zum Erzeugen einer einzigen elementaren Aufzeichnung zur Umleitung, die nicht empfangenen Paketen innerhalb der Ausstrahlungsspur entspricht, wobei die einzige elementare Aufzeichnung zur Umleitung in der Sequenz an den Orten gespeichert ist, wo die entsprechenden elementaren Aufzeichnungen gespeichert worden wären, wenn die Pakete empfangen worden wären.

10. Endgerät nach Anspruch 9, **dadurch gekennzeichnet, dass** es Mittel zum Anzeigen der Informationen umfasst, die sich auf die Unterbrechungszeit beziehen, während der Wiedergabe eines unvollständigen Multimedia-Objekts.

## Claims

1. Method for storing a multimedia object, which is constituted by at least one elementary data flow, by a terminal for receiving the at least one elementary flow, the at least one flow being received by the terminal in the form of data packets, which comprise a data portion and a header, which comprises sequence numbers, said method comprising:
- a step of storing data portions of the received packets in a data object;
- a step of creating a distribution track, which is constituted by elementary recordings relating to the data packets, these elementary recordings being stored in sequence in accordance with the sequence numbers of the received packets and comprising a reference to the data of the packet within the data object;
**characterized in that** it further comprises:
- a step of creating a single elementary recording for redirection corresponding to packets, which are not received within the distribution track, said single elementary recording for redirection being stored in sequence at the locations at which the corresponding elementary recordings would have been stored if the packets had been received.

2. Method according to claim 1, **characterized in that** the sequence number of the packets which are not received is stored in the elementary recordings corresponding to these packets which are not received.

3. Method according to either claim 1 or claim 2, **characterized in that** it further comprises a step of recovering the packets which are not received following the creation of the distribution track.

4. Method according to claim 3, **characterized in that** this step of recovering packets which are not received comprises:
- sending a recovery request to a recovery server; and
- receiving data comprising the packets which are not received in response to the request.

5. Method according to any one of claims 1 to 4, **characterized in that** the packets which are not received form the entirety of an elementary data flow which allows the multimedia object to be completed.

6. Method according to claim 1, **characterized in that** it further comprises a step of storing data relating to the ratio and the location of the missing packets.

7. Data structure storing a multimedia object, which is constituted by at least one elementary data flow, the at least one elementary flow being capable of being distributed in the form of data packets, which comprise a data portion and a header, which comprises sequence numbers, said data structure comprising:
- a data object which stores the data of the at least one flow;
- at least one distribution track which is constituted by elementary recordings relating to the data packets which are capable of being distributed, these elementary recordings being stored in sequence in accordance with the sequence numbers of the packets and comprising a reference to the data of the packet within the data object;
**characterized in that** it further comprises:
- a single elementary recording for redirection corresponding to packets, the data of which are not stored in the data object, within the distribution track, said single elementary recording for redirection being stored in sequence at the locations at which the elementary recordings corresponding to those same packets would have been stored if the corresponding data had been stored in the data object.

8. Data structure according to claim 7, **characterized in that** said single elementary recording for redirection corresponding to packets, the data of which are not stored in the data object, comprises a reference to a management strategy for the missing data.

9. Terminal for receiving a multimedia object, which is constituted by at least one elementary data flow, the at least one flow being received by the terminal in the form of data packets, which comprise a data portion and a header, which comprises sequence numbers, said terminal comprising:
- a means for storing data portions of the received packets in a data object;
- a means for creating a distribution track, which is constituted by elementary recordings relating to the data packets, these elementary recordings being stored in sequence in accordance with the sequence numbers of the received packets and comprising a reference to the data of the packet within the data object;
**characterized in that** it further comprises:
- a means for creating a single elementary recording for redirection corresponding to packets which are not received within the distribution track, said single elementary recording for redirection being stored in sequence at the locations at which the corresponding elementary recordings would have been stored if the packets had been received.

10. Terminal according to claim 9, **characterized in that** it comprises means for displaying data relating to the interruption time during the rendition of an incomplete multimedia object.
